# EUROPEAN PATENT APPLICATION

(11) **EP 0 949 186 A2**
(43) Date of publication of application: **13.10.1999**
(21) Application number: 99302766.3
(22) Date of filing: 09.04.1999
(51) Int. Cl.: B66F 9/065

(54) **Material-handling vehicle**

(30) Priority: 09.04.1998 GB 9807528
(71) Applicant: J.C. BAMFORD EXCAVATORS LIMITED, Uttoxeter Staffordshire ST14 5JP (GB)
(72) Inventor: Cook, David Allan, Cheadle, Staffs ST10 1UX (GB)
(74) Representative: Leach, John Nigel

(57) **Abstract**

A material handling vehicle including a structure having a ground engageable propulsion means, a loader arm mounted for up and down swinging movement, an operator's cab and an engine having an output to provide power for movement of the loader arm and for propulsion of the vehicle, in which the output of the engine is connected to the wheels of the vehicle by a drive and in which the engine is located beneath the longitudinal axis of the loader arm and the engine has a crankshaft, at least one cylinder of the engine having a central axis and a plane of the engine containing the axis of rotation of the crankshaft and the cylinder axis being inclined to the vertical.

## Description

### Description of Invention

This invention relates to a material-handling vehicle of the kind, hereinafter referred to as the "kind specified", including a structure having, ground engageable propulsion means, a loader arm mounted for up and down swinging movement, an operator's cab, an engine having an output to provide power for said movement of the loader arm and propulsion of the vehicle and a drive to connect the output to the ground engageable propulsion means to propel the vehicle.

One vehicle of the kind specified is disclosed in US-Re-30,021. In this machine, which is relatively large, the loader arm is substantially horizontal but is angled downwardly in the forward direction, is partly accommodated in a well provided between the cab and a load canying platform disposed on the opposite side of the loader arm to the operator's cab. As a result the loader arm, in a fully lowered position, is disposed below a horizontal plane containing the top of a steering wheel in the operator's cab so that the driver's vision is substantially unobstructed. This vehicle is sufficiently large that an engine to provide power for swinging movement of the arm and propulsion of the vehicle can be accommodated beneath the well on the centre line of the vehicle.

WO-A-89/00972, CA-A-2,009,968 and EP-A-0,656,315 disclose vehicles of the kind specified in which a loader arm, in a fully lowered position, is similarly substantially horizontal, although the precise angle of the loader arm varies in the three above referred to specifications, and is at least partly accommodated in a well disposed between the operator's cab and a housing in which the engine is disposed. The loader arm is disposed so it does not, at least substantially, interfere with the view of the operator in this direction.

A vehicle configuration as disclosed in these three references, in which the engine is offset to be on the opposite side of the loader arm to the cab, enables the vehicle to be made smaller than the vehicle of US-Re-30021 and enables the overall height of the vehicle to be reduced.

DE-A-2,739,537 discloses another vehicle of the kind specified but in which the loader arm, in its lowered position is disposed so that the loader arm is entirely above the level of the top of a transverse engine and its associated housing. Accordingly the vehicle is unprovided with any well so that in a lowered position the loader arm extends alongside the operator's cab substantially above the bottom of a side window therein so that the driver's view transversely of the vehicle is obstructed.

All the above mentioned vehicles suffer from one or other disadvantage.

In US-Re-30,021 because of the disposition of the engine underneath the loader arm the operator's cab is required to be relatively high so that the operator can still see over the top of the loader arm whilst providing sufficient space beneath the loader arm for the accommodation of the engine.

In WO-A-89/00,972 the engine is arranged with the crankshaft thereof longitudinally of the vehicle. In a vehicle of the type described in this specification and as marketed by the applicants in respect of WO-A- 89/00,97 a hydro-static drive is provided to transfer drive transversely from the engine towards the ground engageable means.

This vehicle suffers from the disadvantage of the need to provide a hydro-static transmission to transfer drive from the engine towards the ground engageable means.

In CA-A-2,009,968 the engine is arranged with its crankshaft longitudinally of the vehicle and a mechanical drive is provided to transfer drive transversely from the engine towards the ground engageable means. This vehicle suffers from the disadvantage of the need to provide a relatively expensive mechanical transfer mechanism to transfer the drive transversely from the engine towards the ground engageable means.

DD A 240 869 discloses a drive for a mechanical handling vehicle of the kind specified in which the engine is disposed with its crank shaft transversely of the vehicle and an angle gear drive is provided to transfer drive through 90° from the engine towards the ground engageable means.

In EP-A-0,656,316 the engine is also disposed with its crank shaft transversely to the vehicle and an angle gear drive is provided to transfer drive through 90° from the engine towards the ground engageable means.

These vehicles suffer from the disadvantage of the need to provide a relatively expensive angle gear drive and associated engineering problems to turn the drive through 90°.

In DE-A-2,739,537 the driver's view transversely across the vehicle is obstructed because of the absence of a well to accommodate the loader arm.

An object of the invention is to provide a material-handling vehicle of the kind specified whereby the above mentioned problems are overcome or are reduced.

According to the present invention we provide a material handling vehicle of the kind specified wherein the engine is located beneath the longitudinal axis of the loader arm and so that a vertical plane containing said loader arm axis intersects said engine and the engine has a crank shaft and at least one cylinder having a central axis, a plane of the engine containing the axis of rotation of the crank shaft and said cylinder axis being inclined to the vertical.

Said plane of the engine may subtend, relative to the horizontal, an angle which lies in the range -10° to +40°.

The drive may be a hydrostatic drive.

The drive may be a mechanical drive or a hydrokinetic drive i.e. a drive which includes a torque converter.

The drive may be communicated from the engine to a gearbox.

The gearbox may have an input shaft which is parallel to the crank shaft of the engine.

The input shaft of the gearbox may be axially aligned with the crank shaft of the engine.

The gearbox may have at least one output mechanically connected to the ground engageable propulsion means.

The vehicle may comprise a front axle and a rear axle each having a ground engageable propulsion means, and the propulsion means of at least one of said axles being connected to said at least one output of the gearbox.

At least one of said axles may have a differential which is connected to said at least one output of the gearbox.

The connection of the gearbox to at least one of said axles may comprise a shaft having a universal joint at least at one end.

The gearbox may be disposed in front of the engine and the gearbox and the engine assembly may be disposed substantially centrally of the vehicle.

A clutch or torque converter or the like may be provided between the engine and the ground engageable propulsion means.

The gearbox may be provided with a clutch or torque converter or the like.

The clutch or torque converter or the like may be provided on the input side of the gearbox.

The vehicle may comprise a chassis having a pair of spaced longitudinally extending frame members.

The engine may be disposed substantially between said frame members.

The frame members may be parallel to each other.

At least one of said chassis side member may be relieved locally to clear at least one of the engine, transmission or associated component.

Mounting means may be provided between the chassis and at least one of the engine and transmission.

The mounting means may comprise compliant mounts.

The longitudinal axis of the loader arm may extend forwardly in or parallel to a vertical plane containing a longitudinal axis of the vehicle.

The structure may have a front end and a rear end with said longitudinal axis of the vehicle extending therebetween and the ground engageable propulsion means being disposed equi-distant from, and on opposite sides of, said longitudinal axis.

The loader arm may be pivotally mounted towards the rear of the vehicle about a horizontal axis.

The loader arm may cany a material handling implement at its front end so that the material handling implement is disposed in front of the front of the structure when the arm is in its lowermost position.

The cab may have a side window which faces transversely across the vehicle at right angles to the longitudinal axis of the loader arm.

The top of the loader arm in a fully lowered position and at a location alongside the top of a steering wheel in the operator's cab may be disposed wholly or substantially wholly below a horizontal plane which is not more than 1 metre, or preferably not more than 0.5. metre, above the top of the steering wheel so that the driver's vision is substantially unobstructed by the loader arm.

If desired, the top of the boom at said location may be wholly or substantially wholly below a horizontal plane containing the top of the steering wheel disposed in the cab.

The loader arm may be telescopic in the direction of the longitudinal axis of the loader arm.

The longitudinal axis of the loader arm may lie in a substantially horizontal plane when the loader arm is in a position in which the implement engages a horizontal plane on which the ground engageable propulsion means are supported and, if the loader arm is telescopic, the loader arm is fully retracted.

The ground engageable propulsion means may be driven from the engine wholly by a mechanical transmission or a hydro kinetic transmission..

The ground engageable propulsion means may comprise a pair of ground engageable wheels disposed adjacent the front of the structure and a pair of rear ground engageable wheels adjacent the rear of the structure.

The wheels of the front pair may be driven from a first output shaft of the gearbox whilst the wheels of the rear pair may be driven by a second output shaft of the gearbox through differential gear means.

The invention will now be described by way of example with reference to the accompanying diagrammatic drawings in which;

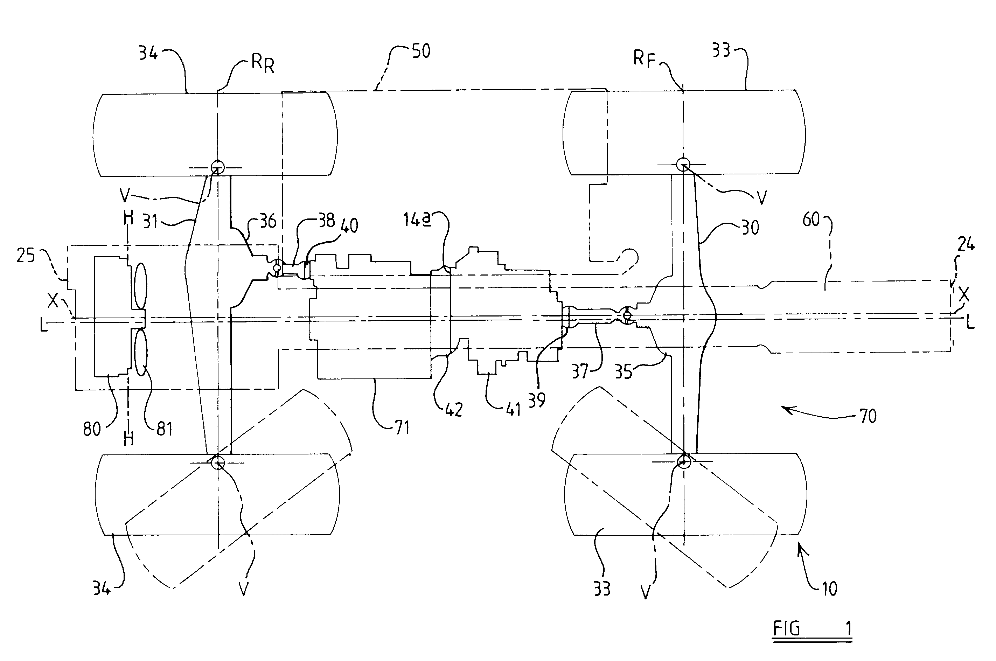

FIGURE 1 is a diagrammatic fragmentary plan view of a material-handling vehicle embodying the invention;

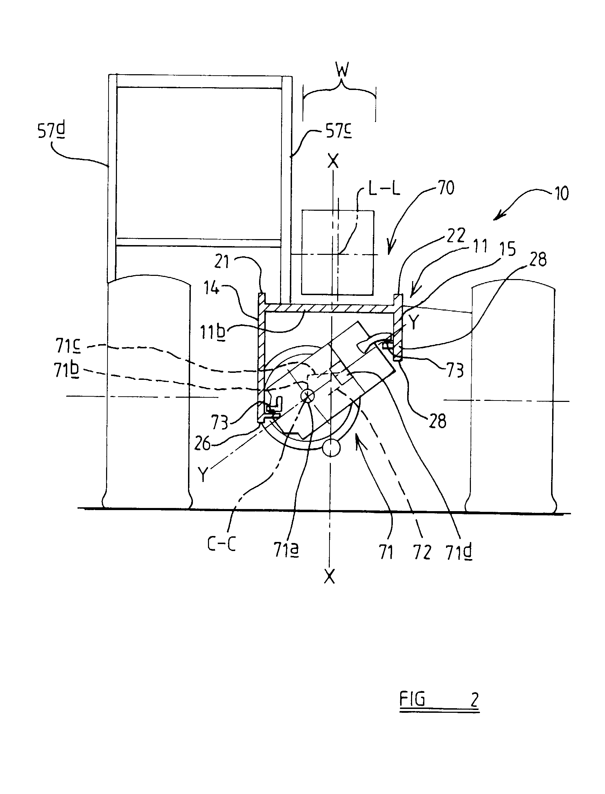

FIGURE 2 is a diagrammatic fragmentary rear end view, partly in section and with parts omitted for clarity, of the machine of Figure 1, and
FIGURE 3 is a diagrammatic fragmentary side view of the machine of Figure 1.

Referring to the Figures, a material-handling vehicle is indicated generally at 10 and comprises a main structure 11 having a front end 12 and a rear end 13 with a longitudinal axis X-X extending between the front and rear ends. The structure 11 comprises a pair of spaced parallel frame members 14, 15 held in spaced parallel relationship by cross members.

Each frame member 14, 15 has a upper surface 21, 22 respectively. At the front and rear, the frame members 14, 15 have generally upright parts 24, 25 respectively whilst on their undersides they have a lower surface 26, 27 respectively. The right-hand frame member 15 has an upwardly relieved part 28 to provide clearance for an engine as hereinafter to be described.

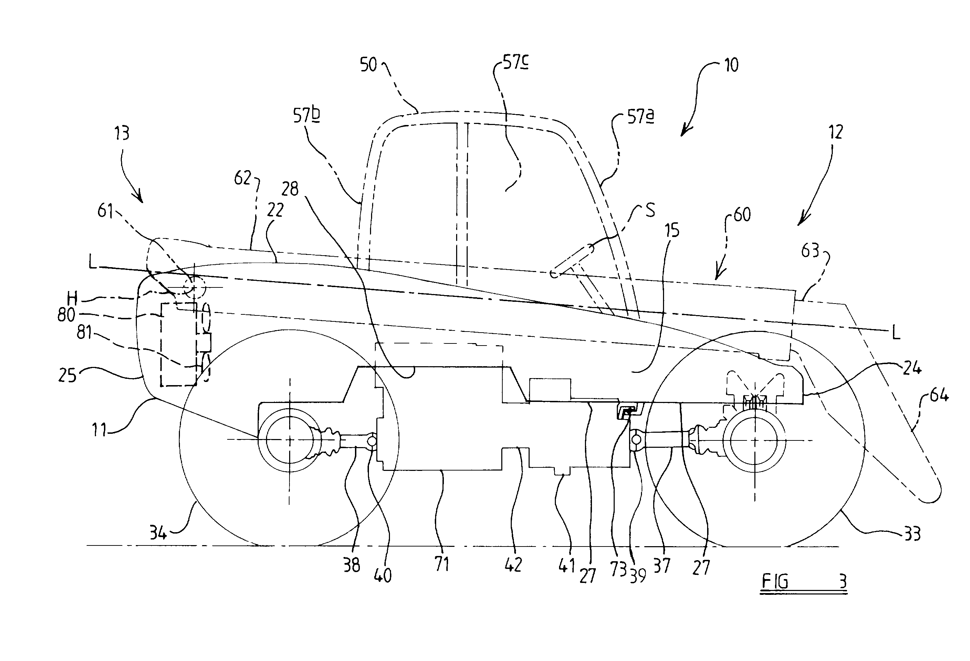

A front axle 30 is mounted on the frame members 14, 15 at the front end thereof whilst a rear axle 31 is mounted on the frame members 15 towards the rear thereof. The axles 30, 31 are of conventional type carrying at their opposite ends front wheels 33 and rear wheels 34 respectively. Both the front wheels 33 and both rear wheels 34 are pivotable relative to their associated axis about a steering axis V for steering movement of the vehicle, as shown in chain dotted line in Figure 3. If desired at least one of the axles may be mounted relative to the frame members 14, 15 for oscillation about a longitudinally extending axis. Each axle 30, 31 is provided with a differential 35, 36 respectively of conventional form, the differentials being driven by propeller shafts 37, 38 respectively from front and rear output shafts 39, 40 respectively of a change speed gearbox 41 incorporating, by virtue of being bolted thereto, a torque converter 42 which is driven by an engine 71 hereinafter to be described. The gearbox 41 has input and output shafts and change speed gear carrying shafts which extend generally parallel to the longitudinal axis X-X. If desired the torque converter 42 may be omitted or provided in some other suitable position in the drive train or other means for disconnecting drive to the ground engageable propulsion means when the vehicle is stationary may be provided.

The change speed gearbox 41 is mounted on the frame members 14, 15 so as to be disposed therebetween and disposed so that a rear end face 14a of the gearbox is at a position approximately midway between transverse axes R_{F}, R_{R} respectively extending horizontally through the axes V and the centre of propulsive rotation of each wheel 33, 34.

An operator's cab 50 is mounted on the frame member 14 by vibration isolating mounts so that the cab 50 is supported on one side of the longitudinal axis X-X of the vehicle. The cab 50 has a front window 57a a rear window 57b and two side windows 57c 57d the window 57c facing transversely across the machine. The or each window may be provided with a transparent closure element such as glass, or may be open, or may be provided with a protective element such as a grille or bars. A driver's seat, steering wheel S and other controls, not shown, are provided in the cab and the cab is provided with an access door or opening on the side in which the window 57d is provided.

A loader arm 60, having a longitudinal axis L-L which lies in a vertical plane parallel to a vertical plane containing the longitudinal axis X-X of the vehicle, is pivotally mounted, by means of an axis member 61, between the frame members 14, 15 at the rear 13 of the vehicle for pivotal up and down swinging movement about a horizontal axis H. The loader arm 60 is telescopic and comprises a rear outer section 62 which is pivotally connected to the frame members 14 and 15 by the axis 61 and a forward inner member 63 which is telescopically slidable within the section 62 under the control of hydraulic rams in conventional manner. At its front end the part 63 is provided with a downwardly and forwardly extending part 64 adapted to carry a material handling implement such as a loader bucket or lifting forks or other desired material handling means. If desired the loader arm may have more than two telescopically slidable sections or may not be telescopic.

When the loader arm 60 is in its lowermost position, as shown in the Figures, it lies in a well 70 of a minimum width W which is greater than the width of the loader arm and provided between the cab 50 and the frame member 15. In this lowermost position the aim is substantially horizontal but is inclined slightly downwardly in a forward direction.

An interval combustion engine 71 is disposed beneath the loader arm so that a vertical plane containing the longitudinal axis X-X of the loader arm intersects the engine 71. The engine 71 is, in the present example, a four cylinder diesel engine having a crank shaft 71a rotatable about an axis C-C which is parallel to the vehicle longitudinal axes X-X. Cranks 71b of the crank shaft 71a are connected by connecting rods 71c to respective pistons 71d which reciprocate in cylinders 72 each having a central longitudinal axis Y-Y, in conventional manner. The crankshaft 71a provides, or is connected to, an output of the engine which is connected to an input of the torque converter 42, or to the input shaft of the gearbox 41 when the torque converter 42 is omitted or provided elsewhere in the drive.

The engine is disposed so that the axis Y-Y of the cylinders, which in the present example are co-planar, lie at an angle of 37.5° to the horizontal. If desired, the longitudinal axis Y-Y of at least one cylinder may subtend an angle to the horizontal which lies in the range -10° to +40°.

If desired, the engine may be provided with two banks of cylinders each bank being disposed on opposite side of a median plane, which may be vertical containing the axis of rotation C-C of the crank shaft.

The axes Y-Y of the cylinders of each bank may subtend an angle to the horizontal which lies in the range 0° to 40°.

The pistons in the or each bank may lie in a common plane.

Alternatively, if desired the cylinders of the or each bank may not be coplanar.

The engine 71 and gearbox 41 are mounted on the frame members 14 and 15 by means of three compliant mounts 73. If desired the mounts may be positioned in other positions to those illustrated herein and or more than three mounts may be provided.

Disposed towards the rear of the vehicle is a cooling radiator 80 which is provided with a hydraulically operated fan 81 or, if desired, by an electrically or mechanically operated fan, to cause flow of cooling air over the radiator. Suitable ventilation openings may be provided in the vehicle for flow of such air. The axis of the fan may lie in a vertical plane in parallel to the longitudinal axis X-X of the vehicle. If desired the axis of rotation of the fan may be horizontal. If desired the radiator may be positioned in another suitable desired position on the vehicle, any provided fan being driven as desired.

The radiator 80 is supplied with coolant of the engine 71 via pipes, not shown.

Although in the above described example the engine is disposed wholly to the rear of a mid-point between the axis R_{F} and R_{R} and the gearbox is substantially wholly to the front of such mid-point, if desired, the engine may be positioned in any desired longitudinal position between the wheels and the gearbox may be positioned at any desired position on the machine. Any suitable means may be provided to provide kinematically transmitted drive between the engine and the gearbox.

The width of the chassis is determined by the desired clearance between the chassis and the wheels.

The top of the loader arm 60 in a fully lowered position and at a location alongside the top of a steering wheel in the operator's cab is disposed wholly or substantially wholly below a horizontal plane which is not more than 1 metre, or preferably not more than 0.5 metre, above the top of the steering wheel so that the driver's vision is substantially unobstructed by the loader arm. If desired, and as in the present case, the top of the boom at said location is wholly below a horizontal plane containing the top of the steering wheel.

The loader arm in its lowered position may be horizontal or may extend forwardly and downwardly.

The loader arm may be telescopic in the direction of the longitudinal axis of the loader arm.

The longitudinal axis of the loader arm may lie in a substantially horizontal plane when the loader arm is in a position in which the implement engages a horizontal plane on which the ground engageable propulsion means are supported and, if the loader arm is telescopic, the loader arm is fully retracted.

In this specification by "substantially horizontal" we mean that the longitudinal axis is either in a horizontal plane or is in a plane which is inclined upwardly or downwardly to the horizontal at an angle lying in the range +5° to -25°.

If desired, the wheels on the front axle may have a different track to the wheels of the rear axle.

The wheels of an axle are equally distant from, and on opposite sides of, the longitudinal axis of the vehicle.

If desired, the ground engageable propulsion means may comprise endless tracks extending for and aft between the front and rear axles on a respective side of the vehicle.

By a "longitudinal axis of the vehicle" we mean an axis which passes through a mid-point of the front wheel track and the rear wheel track of the vehicle.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such feature, be utilised for realising the invention in diverse forms thereof.

## Claims

1. A material handling vehicle including a structure having, ground engageable propulsion means, a loader arm mounted for up and down swinging movement, an operator's cab, an engine having an output to provide power for said movement of the loader arm and propulsion of the vehicle and a drive to connect the output to the ground engageable propulsion means to propel the vehicle, wherein the engine is located beneath the longitudinal axis of the loader arm and so that a vertical plane containing said loader arm intersects said engine and the engine has a crankshaft and at least one cylinder having a central axis, a plane of the engine containing the axis of rotation of the crankshaft and said cylinder axis being inclined to the vertical.

2. A vehicle according to claim 1 wherein said plane of the engine subtends, relative to the horizontal, an angle which lies in the range -10° to +40°.

3. A vehicle according to claim 1 or claim 2 wherein the drive is a hydrostatic drive.

4. A vehicle according to claim 1 or claim 2 wherein the drive is a mechanical drive or a hydrokinetic drive.

5. A vehicle according to any of the preceding claims wherein the drive is communicated from the engine to the gearbox.

6. A vehicle according to claim 5 wherein the gearbox has an input shaft which is parallel to the crankshaft of the engine.

7. A vehicle according to claim 6 wherein the input shaft of the gearbox is axially aligned with the crankshaft of the engine.

8. A vehicle according to any one of claims 5 to 7 wherein the gearbox has at least one output mechanically connected to the ground engageable propulsion means.

9. A vehicle according to any one of claims 5 to 8 wherein the vehicle includes a front axle and a rear axle each having a ground engageable propulsion means, and the propulsion means of at least one of said axles being connected to said at least one output of the gearbox.

10. A vehicle according to claim 9 wherein at least one of said axles has a differential which is connected to said at least one output of the gearbox.

11. A vehicle according to claim 9 or claim 10 wherein the connection of the gearbox to at least one of said axles comprises a shaft having a universal joint at least at one end.

12. A vehicle according to any one of claims 5 to 11 wherein the gearbox is disposed in front of the engine and the gearbox and the engine assembly are disposed substantially centrally of the vehicle.

13. A vehicle according to any one of the preceding claims wherein a clutch or torque converter or the like is provided between the engine and the ground engageable propulsion means.

14. A vehicle according to claim 13 when dependent directly or indirectly on claim 5 wherein the gearbox may be provided with a clutch or torque converter or the like.

15. A vehicle according to claim 14 wherein the clutch or torque converter or the like is provided on the input side of the gearbox.

16. A vehicle according to any of the preceding claims wherein the vehicle comprises a chassis having a pair of spaced longitudinally extending frame members.

17. A vehicle according to claim 16 wherein the engine is disposed substantially between said frame members.

18. A vehicle according to claim 16 or 17 wherein at least one of said chassis side members is relieved locally to clear at least one of the engine, transmission or associated components.

19. A vehicle according to any one of claims 16 to 18 wherein the mounting means are provided between the chassis and at least one of the engine and transmission.

20. A vehicle according to any of the preceding claims wherein the longitudinal axis of the loader arm extends forwardly in, or parallel to a vertical plane containing a longitudinal axis of the vehicle.

21. A vehicle according to any one of the preceding claims wherein the loader arm is pivotally mounted towards the rear of the vehicle about a horizontal axis.

22. A vehicle according to any one of the preceding claims wherein the loader arm carries a material handling implement at its front end so that the material handling implement is disposed in front of the structure when the arm is in its lowermost position.

23. A vehicle according to any one of the preceding claims wherein its cab has a side window which faces transversely across the vehicle at right angles to the longitudinal axis of the loader arm.

24. A vehicle according to any one of the preceding claims wherein the top of the loader arm in a fully lowered position and at a location alongside the top of a steering wheel in the operator's cab is disposed wholly or substantially wholly below a horizontal plane which is not more than 1 metre, or preferably not more than 0.5 metres, above the top of the steering wheel so that the driver's vision is substantially unobstructed by the loader arm.

25. A vehicle according to claim 24 wherein the top of the boom at said location is wholly or substantially below a horizontal plane containing the top of the steering wheel.

26. A vehicle according to any one of the preceding claims wherein the longitudinal axis of the loader arm lies in a substantially horizontal plane when the loader arm is in a position in which the implement engages a horizontal plane on which the ground engageable propulsion means are supported.

27. A vehicle according to claim 4 or any one of claims 5 to 26 when directly or indirectly dependent on claim 4 wherein the ground engageable propulsion means is driven from the engine wholly by a mechanical transmission or a hydrokinetic transmission.

28. A vehicle according to any one of the preceding claims wherein the ground engageable propulsion means comprises a pair of front ground engageable wheels disposed adjacent the front of the structure and a pair of rear ground engageable wheels adjacent the rear of the structure.

29. A vehicle according to claim 28 wherein the wheels of the front pair are driven from a first output shaft of the gearbox whilst the wheels of the rear pair are driven by a second output shaft of the gearbox through differential gear means.
